Europäisches Patentamt

European Patent Office

Office européen des brevets

(11) Numéro de publication: **0 209 474**
A1

# (12) DEMANDE DE BREVET EUROPEEN

(21) Numéro de dépôt: 86420177.7

(22) Date de dépôt: 04.07.86

(51) Int. Cl.⁴: **A 01 K 1/01,** A 01 K 1/035

(30) Priorité: 12.07.85 FR 8511262

(43) Date de publication de la demande: 21.01.87
Bulletin 87/4

(84) Etats contractants désignés: AT BE CH DE FR GB IT LI LU NL SE

(71) Demandeur: Loctin, Albert, 92 rue Antoine Charial, F-69003 Lyon Rhone (FR)

(72) Inventeur: Loctin, Albert, 92 rue Antoine Charial, F-69003 Lyon Rhone (FR)

(74) Mandataire: Bratel, Gérard et al, Cabinet GERMAIN & MAUREAU Le Britannia - Tour C 20, boulevard E. Deruelle, F-69003 Lyon (FR)

(54) Appareil sanitaire pour chiens et chats.

(57) L'appareil comprend une enceinte avec une ouverture d'accès (6) pouvant être fermée par une porte (7). Dans l'enceinte sont prévus des moyens (11) pour le rinçage des parois latérales (4), et d'autres moyens (12, 13) pour le lavage de la partie inférieure (3), tous ces moyens étant raccordés à une arrivée d'eau (16). Un coffret électronique (27), relié à un détecteur (25, 26) de présence de l'animal, déclenche et contrôle automatiquement la séquence de nettoyage, par ouverture d'une électrovanne (17), seulement après la sortie de l'animal, et en provoquant au préalable la fermeture de la porte (7).

1

La présente invention concerne un appareil sanitaire, à usages domestiques et autres, pour chiens et chats, constituant une sorte de "water-closet" adapté à ces animaux.

Cet appareil sanitaire pour chiens et chats appartient au genre connu comprenant une enceinte pourvue d'une ouverture d'accès susceptible d'être fermée par une porte, avec une arrivée d'eau raccordée à des moyens de rinçage des parois latérales de l'enceinte et à des moyens de lavage de la partie inférieure de l'enceinte, au moins une électrovanne étant prévue entre l'arrivée d'eau et les moyens de rinçage et de lavage, tandis qu'un broyeur est intercalé sur une évacuation d'eau partant de la partie inférieure de l'enceinte.

La multiplication des animaux de compagnie pose des problèmes sanitaires, auxquels ce genre d'appareils essaye d'apporter une réponse. Toutefois, si diverses solutions ont déjà été envisagées, pratiquement aucun appareil à usage domestique n'a jusqu'à présent été réalisé et commercialisé, sans doute en raison d'une inadaptation de ces solutions et à un côté insuffisamment étudié des appareils proposés jusqu'à ce jour.

Ainsi, un appareil du genre précisé ci-dessus est décrit dans le brevet français 2 247 585. L'automatisme de cet appareil reste très partiel, car le cycle d'arrosage des parois et du fond doit être déclenché par action manuelle sur un bouton, après fermeture (elle aussi manuelle) de la porte. Cette contrainte interdit un fonctionnement de l'appareil qui soit entièrement autonome, c'est-à-dire qui puisse se faire en fonction des besoins de l'animal, sans exiger la présence du maître de l'animal ou d'une autre personne, ceci pendant une durée indéterminée et éventuellement très longue, au cas où l'animal serait laissé seul par exemple dans un appartement.

Il a été aussi proposé des appareils avec chasse d'eau déclenchée par l'animal lui-même - voir les brevets US 2 204 416 et 3 318 285. Dans ces appareils, l'enceinte possède une ouverture d'entrée de l'animal et une ouverture de sortie de l'animal, et la chasse d'eau est déclenchée mécaniquement lorsque l'animal marche sur une palette basculante, ou bien lorsqu'il pousse une porte. De tels appareils, purement mécaniques, ne comportent aucun système de contrôle permettant de satisfaire les exigences actuelles de fiabilité et de sécurité, qui sont essentielles pour tous appareils à fonctionnement automatique, et qui dans le cas présent devraient tenir compte du caractère éventuellement capricieux de l'animal.

De plus, ces appareils mécaniques peuvent se concevoir seulement avec une chasse d'eau.

La présente invention évite tous les inconvénients précédents, en fournissant un appareil sanitaire pour chiens et chats qui fonctionne de manière entièrement autonome, en supprimant toute contrainte pour le maître de l'animal, tout en assurant une sécurité et une propreté parfaites, et en rendant inutile le dispositif habituel de chasse d'eau.

A cet effet, dans l'appareil sanitaire pour chiens et chats objet de l'invention, du genre indiqué en introduction, sont prévus :

- des moyens à moteur pour la commande d'ouverture et de fermeture de la porte,

- un coffret électronique déclenchant et contrôlant le déroulement automatique d'une séquence de nettoyage, avec alimentation en eau des moyens de rinçage et de lavage par ouverture de l'électrovanne,

- des moyens de détection de la présence d'un animal dans l'enceinte, qui interdisent toute séquence de nettoyage aussi longtemps que l'animal est présent, et qui autorisent l'actionnement des moyens à moteur précités, pour la fermeture de la porte, après la sortie de l'animal, et

- un contact électrique de détection de la fermeture de la porte, autorisant le déroulement de la séquence de nettoyage proprement dite.

Ainsi, le démarrage automatique du processus de nettoyage des parois et du fond de l'enceinte n'a lieu qu'après détection de la sortie de l'animal, suivie d'une détection de la fermeture effective de la porte qui est maintenue ouverte lorsque l'appareil se trouve en position d'attente, pour permettre l'entrée de l'animal. L'appareil est ainsi prêt à fonctionner à tout moment, sans intervention humaine et en toute sécurité, et aussi dans des conditions de propreté convenables, la fermeture de la porte évitant tout risque de projection d'eau vers l'extérieur et interdisant l'accès à l'enceinte durant tout le cycle de nettoyage.

Les moyens de détection de la présence d'un animal dans l'enceinte comprennent, par exemple, un émetteur infrarouge et un récepteur infrarouge, reliés électriquement au coffret électronique.

Dans un but de sécurité maximale, le coffret électronique est prévu, de préférence, pour commander la fermeture de la porte, par actionnement des moyens à moteur précités, seulement après un certain délai de sécurité suivant la détection de sortie de l'animal hors de l'enceinte par les moyens de détection de présence. Cette temporisation permet de s'assurer que l'animal ne soit pas enfermé.

Une sécurité absolue peut être obtenue en prévoyant, en outre, que le coffret électronique fasse débuter la séquence de nettoyage proprement dite, avec ouverture de l'électrovanne, seulement après un deuxième délai de sécurité suivant la détection de fermeture de la porte par le contact électrique correspondant.

Cette électrovanne contrôlée par le coffret électronique, permet de raccorder les moyens de rinçage et de lavage de l'enceinte directement à une arrivée d'eau sous pression, sans nécessité d'un réservoir intermédiaire de chasse d'eau. Dans une forme de réalisation simple et économique, les moyens de rinçage de parois latérales de l'enceinte sont constitués par un dispositif rotatif à jets, alimenté en eau sous pression lorsque l'électrovanne est ouverte. Quant aux moyens de lavage de la partie inférieure de l'enceinte, ceux-ci peuvent être constitués par une sortie d'eau unique animée d'un mouvement de rotation alternatif, à partir d'un moteur mis en service durant l'ouverture de l'électrovanne, de manière à émettre un jet d'eau qui "balaye" toute la partie inférieure de l'enceinte.

Selon une autre caractéristique, l'évacuation d'eau comporte un pressostat qui contrôle le fonctionnement du broyeur, par l'intermédiaire du coffret électronique ; grâce au pressostat, le broyeur est mis en service seulement en cas de présence d'eau dans le conduit d'évacuation.

L'automatisme intégral de l'appareil permet l'adjonction de dispositifs auxiliaires qui pourront être, eux aussi, parfaitement contrôlés. Ainsi, l'appareil peut comporter encore un dispositif de distribution de "litière", actionné sous le contrôle du coffret électronique après une séquence de nettoyage proprement dite, pour distribuer automatiquement un produit tel que granulés sur la partie inférieure de l'enceinte, et renouveler ce produit au fur et à mesure qu'il s'évacue. On peut encore ajouter un dispositif de diffusion automatique d'un produit désodorisant, actionné sous le contrôle du coffret électronique après une séquence de nettoyage proprement dite.

La séquence de nettoyage peut être déclenchée après chaque passage de l'animal dans l'appareil, pour un lavage et un rinçage systématiques. Un fonctionnement plus souple, et plus économique en eau et en électricité, peut cependant être obtenu, en prévoyant que le coffret électronique est relié à un tableau de commande prévu pour une sélection de la fréquence de déclenchement du cycle de nettoyage, permettant de déclencher ce cycle seulement une fois pour "N" passages successifs de l'animal. La sélection de fréquence est aussi applicable à la distribution de "litière" et à la diffusion de produit désodorisant.

Quelle que soit la fréquence du cycle de nettoyage, et les dispositifs additionnels actionnés éventuellement à l'occasion d'un cycle de nettoyage, l'appareil est toujours remis dans sa situation initiale après chaque cycle, pour être prêt à effectuer un nouveau cycle, ce qui implique la réouverture automatique de la porte en fin de cycle.

De toute façon, l'invention sera mieux comprise à l'aide de la description qui suit, en référence au dessin schématique annexé représentant, à titre d'exemple non limitatif, une forme d'exécution de cet appareil sanitaire pour chiens et chats :

Figure 1 est une vue d'ensemble, en perspective, d'un appareil sanitaire domestique conforme à la présente invention ;

Figure 2 est une vue en coupe verticale de l'appareil ;

Figure 3 est un schéma de principe des circuits hydrauliques et électriques de cet appareil ;

Figure 4 représente, à échelle agrandie, un détail de l'appareil selon les figures précédentes.

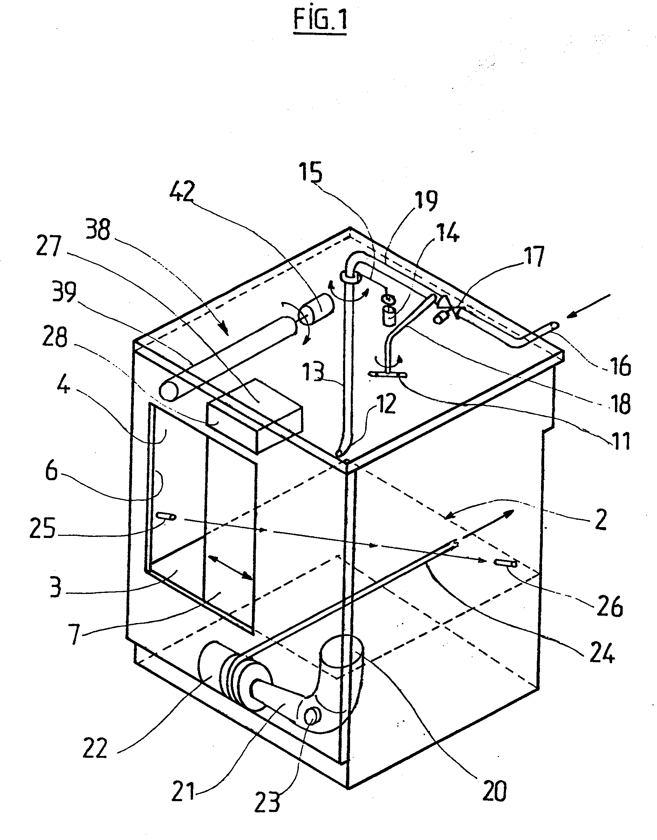

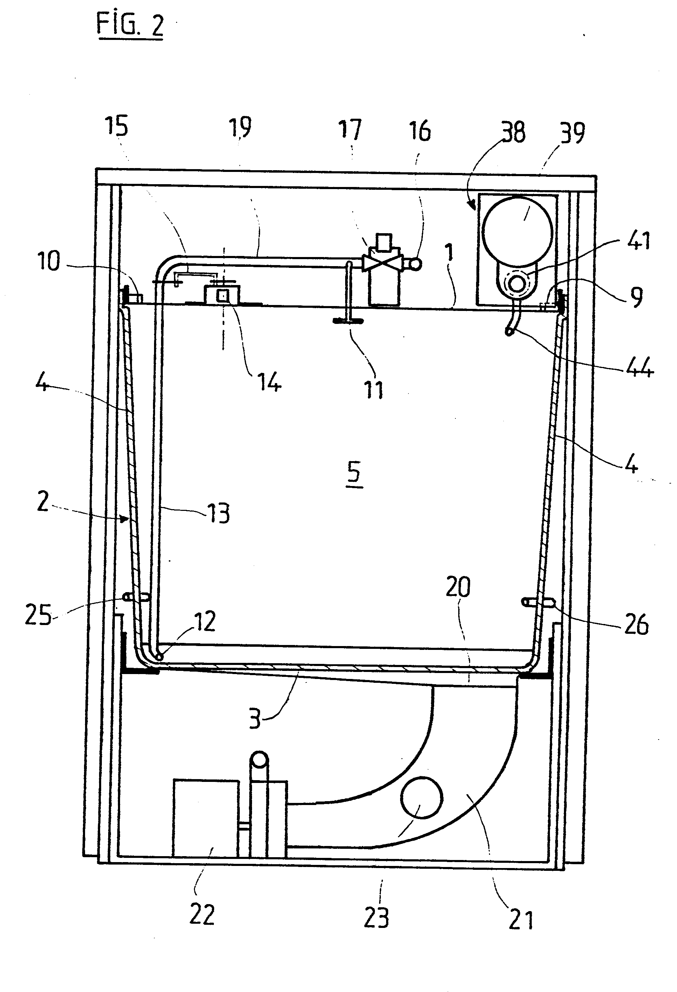

L'appareil sanitaire pour chiens et chats, représenté aux figures 1 et 2, présente extérieurement une forme parallélépipédique, avec un aspect extérieur et des dimensions qui permettent son intégration dans des éléments existants, tels que mobiliers de cuisine, placards, etc...

L'appareil comprend, sous son habillage extérieur, une paroi horizontale 1 et un bac ou une cuve 2 avec un fond 3 et quatre parois latérales 4, qui ensemble délimitent une enceinte 5, destinée à recevoir l'animal.

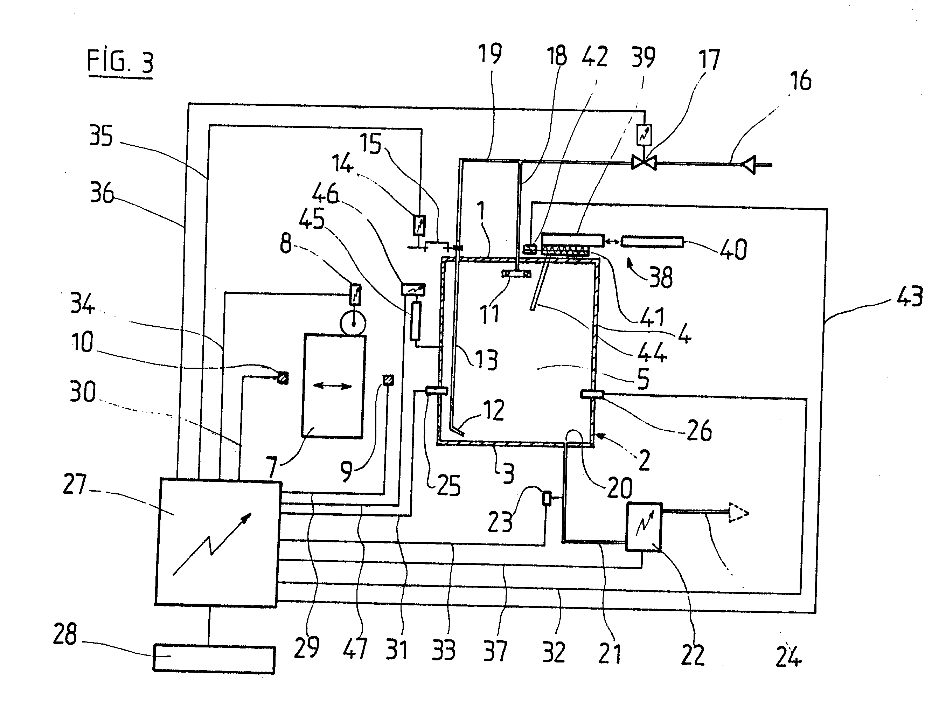

Une ouverture 6 est ménagée dans l'une des parois latérales de l'appareil, pour permettre l'accès de l'animal à l'enceinte 5. Une porte 7 permet de fermer temporairement l'ouverture d'accès 6. La porte 7, qui peut être une porte coulissante, est commandée par un moteur électrique 8 ; un contact électrique 9 permettant de détecter l'ouverture de la porte 7 est disposé sur un bord de l'ouverture 6, et un autre contact électrique 10 permettant de détecter la fermeture de la porte 7 est disposé sur le côté opposé - voir aussi figure 3.

A l'intérieur de l'enceinte 5, et à la partie supérieure de celle-ci, est placé un dispositif rotatif à jets 11, alimenté en eau sous pression, pour le rinçage des parois latérales 4 du bac 2. A la base de l'enceinte 5, vers l'un des angles du bac 2, est encore prévue une sortie d'eau 12, pour le lavage du fond 3 de ce bac 2. La sortie d'eau 12 est constituée par un coude inférieur d'un tube vertical 13, animé d'un mouvement de rotation alternatif autour de son axe, à partir d'un petit moteur électrique 14 et par l'intermédiaire d'un mécanisme à biellette 15.

L'appareil comprend un conduit 16 de raccordement à une arrivée d'eau froide domestique, aboutissant à une électrovanne 17. Au-delà de l'électrovanne 17, le conduit 16 se subdivise en deux branches 18,19. La première branche 18 alimente le dispositif rotatif à jets 11, et la seconde branche 19 aboutit au sommet du tube vertical 13 qui amène l'eau à la base de l'enceinte 5.

Le fond 3 du bac 4 comporte un orifice d'évacuation 20, constituant le point de départ d'un conduit d'évacuation 21 de forte section qui aboutit à un broyeur 22. Un pressostat 23, intercalé sur le conduit d'évacuation 21, déclenche le fonctionnement du broyeur 22. La sortie de ce broyeur 22 est raccordée à un conduit de sortie 24, de plus petite section, qui est lui-même relié à un réseau d'évacuation des eaux usées.

A l'intérieur de l'enceinte 5 sont placés des moyens susceptibles de détecter la présence d'un animal dans l'enceinte 5. Ces moyens comprennent, dans l'exemple considéré, un émetteur infrarouge 25 situé vers l'une des arêtes verticales du bac 2, et un récepteur infrarouge 26 placé en regard de l'émetteur 25, dans l'angle opposé, le faisceau infrarouge traversant l'enceinte 5 suivant une diagonale, à une hauteur convenable.

L'appareil comprend encore dans sa partie supérieure, au-dessus de la paroi 1, un coffret électronique de contrôle 27, associé à un tableau de commande 28 accessible sur la façade de l'appareil - voir figures 1 et 3.

Le coffret électronique 27 est relié, par une première série de liaisons électriques 29,30,31,32,33 aux différents dispositifs de détection : les deux liaisons électriques 29,30 aboutissent ainsi aux contacts 9,10 qui détectent respectivement l'ouverture et la fermeture de la porte 7, tandis que les deux autres liaisons électriques 31,32 mènent, respectivement, à l'émetteur infrarouge 25 et au récepteur infrarouge 26, la liaison électrique 33 raccordant enfin le coffret 27 au pressostat 23.

En outre, le coffret électronique 27 est raccordé, par des fils d'alimentation électrique 34,35,36,37, respectivement au moteur 8 de commande de la porte 7, au moteur 14 d'entraînement du tube 13, à l'électrovanne 17 et au broyeur 22.

6

L'appareil peut comporter encore des dispositifs auxiliaires, également contrôlés par le coffret électronique 27 :

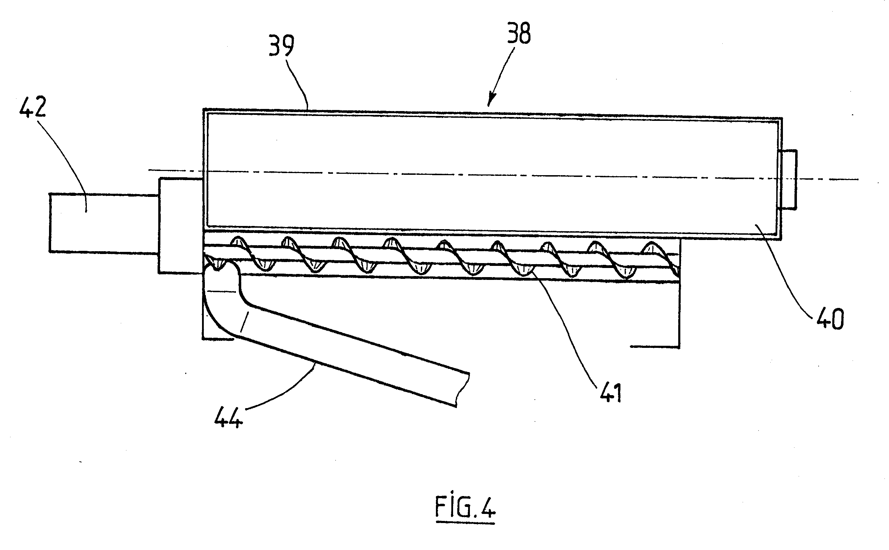

Dans la partie supérieure de l'appareil est placé un dispositif 38 de distribution d'une "litière", constituée par des granulés physiologiques. Le dispositif 38, représenté en détail sur la figure 4, comprend un logement 39 prévu pour recevoir une cartouche cylindrique interchangeable 40, contenant les granulés à distribuer. Au-dessous du logement 39 est prévue une vis d'Archimède 41, d'axe horizontal, accouplée à un moteur électrique 42, lequel est raccordé au coffret 27 par un fil d'alimentation électrique 43. Un tube déflecteur 44 ou une goulotte, partant d'une extrémité de la vis d'Archimède 41 assure l'introduction et la diffusion des granulés dans l'enceinte 5.

Un autre dispositif auxiliaire, éventuellement monté sur l'appareil, est un support pour une cartouche de produit désodorisant 45, associé à un électro-aimant 46 alimenté par un fil électrique 47 - voir figure 3.

L'appareil étant raccordé aux réseaux d'alimentation en eau froide, d'évacuation des eaux usées et d'alimentation électrique, et étant mis sous tension par un interrupteur placé sur le tableau de commande 28, celui-ci peut fonctionner de façon entièrement autonome, sous le contrôle du coffret électronique 27, de la manière décrite ci-après :

Habituellement, l'appareil se trouve en position d'attente, tous les moteurs 8,14,42 ainsi que le broyeur 22 étant à l'arrêt, l'électrovanne 17 étant fermée, le détecteur infrarouge 25,26 restant en service, et la porte 7 étant ouverte pour laisser un libre accès à l'enceinte 5 par l'ouverture 6. Un animal domestique, chien ou chat, peut ainsi pénétrer à l'intérieur de l'enceinte 5 au gré de ses besoins naturels.

Une fois entré dans l'enceinte 5, l'animal par sa présence coupe le faisceau infrarouge, et le récepteur infrarouge 26 transmet, par la liaison électrique 32, une information qui est prise en compte par le coffret électronique 27.

Dès réception de cette information, toute séquence de nettoyage de l'appareil est interdite, afin d'assurer une sécurité maximale. Une horloge interne au coffret 27 peut évaluer le temps de coupure du faisceau infrarouge, afin de distinguer si l'animal effectue une simple "visite" fugitive, ou s'il satisfait effectivement un besoin naturel.

Dans le premier cas, une fois l'animal ressorti de l'enceinte 5, l'appareil est maintenu en position d'attente, sans effectuer le cycle de nettoyage, ceci par souci d'économie d'eau et d'électricité.

Dans le second cas, une fois l'animal ressorti de l'enceinte 5, un cycle de nettoyage est autorisé à débuter.

En considérant ce dernier cas, l'animal libère le faisceau infrarouge issu de l'émetteur 25, ce qui est constaté par le récepteur 26 et provoque une mise en attente pendant une durée prédéterminée, par exemple d'environ une minute, constituant un délai de sécurité permettant de s'assurer de l'absence de l'animal avant le début de la séquence de nettoyage proprement dite.

Passé ce délai de sécurité, le coffret électronique 27 ordonne la fermeture de la porte 7, en alimentant le moteur électrique 8 ; à l'approche de sa position entièrement fermée, la porte 7 vient actionner le contact 10 qui détecte la fermeture de cette porte. Le signal émis par le contact 10 fait débuter un nouveau délai d'attente de sécurité.

Ainsi, au cas où l'animal aurait échappé au faisceau infrarouge, dès le début de la fermeture de la porte 7 il se serait précipité pour sortir, recoupant alors le faisceau et provoquant la réouverture de la porte 7.

Après ce deuxième délai d'attente de sécurité, le cycle de nettoyage proprement dit débute, par une commande d'ouverture de l'électrovanne 17, et par la mise sous tension du moteur 14 commandant le mouvement de rotation alternatif du tube 13. L'eau sous pression est ainsi admise dans les deux branches 18,19.

L'eau parvient donc par la branche 18 au dispositif 11 qui, sous l'effet de la pression et par phénomène de réaction, entre en rotation et émet des jets d'eau qui se brisent sur les parois latérales 4 du bac 2, provoquant le rinçage de ces parois 4.

Simultanément, l'eau acheminée par la branche 19 et par le tube 13 vers la sortie 12 arrose le fond 3 du bac 2. En raison de la rotation alternative du tube 13, le jet d'eau issu de la sortie 12 nettoie la totalité du fond 3 du bac 2, entraînant avec elle les matières et l'urine.

Toute l'eau envoyée dans le bac 2 rejoint l'orifice d'évacuation 20 et le conduit d'évacuation 21, où elle est détectée par le pressostat 23 qui déclenche alors le fonctionnement du broyeur 22. Ce dernier refoule l'eau l'usée et les matières broyées, par le conduit de sortie 24, vers le réseau extérieur d'évacuation.

Après une durée prédéterminée, le coffret électronique 27 commande la fermeture de l'électrovanne 17, et il coupe l'alimentation du

8

moteur 14, ce qui interrompt l'arrosage des parois latérales 4 et du fond 3 du bac 2. L'eau finissant de s'évacuer par le conduit 21, le pressostat 23 détecte une absence d'eau et commande l'arrêt du broyeur 22.

A ce moment, le moteur 42 du dispositif 38 de distribution de "litière" est mis sous tension, et il entraîne en rotation la vis d'Archimède 41, pour extraire une certaine quantité de granulés provenant de la cartouche 40, préalablement mise en place dans le logement 39. Une dose de granulés est ainsi déversée, par le tube déflecteur 44, sur le fond 3 du bac 2. En tombant, les granulés coupent le faisceau infrarouge, indiquant ainsi au coffret électronique 27 que la cartouche 40 contient encore une quantité suffisante de granulés.

S'il n'en était pas ainsi, le coffret électronique 27 ordonnerait l'éclairement d'un voyant, tel qu'une diode électro-luminescente, sur le tableau de commande 28, pour indiquer à la personne ayant en charge l'appareil qu'il est nécessaire de remplacer la cartouche 40.

Le bac 2 de l'appareil ayant été nettoyé, et son fond 3 ayant été de nouveau tapissé d'une "litière" propre, comme décrit précédemment, l'électro- aimant 46 est encore alimenté, ce qui autorise la diffusion dans l'enceinte 5 d'une dose de produit désodorisant provenant de la cartouche 45.

Le cycle de nettoyage proprement dit est alors terminé. Finalement, le moteur 8 est alimenté pour commander l'ouverture de la porte 7, qui à l'approche de sa position entièrement ouverte vient actionner le contact 9 détectant l'ouverture de cette porte. L'appareil revient ainsi dans son état initial, en position d'attente permettant le démarrage d'un nouveau cycle, dès que l'animal pénétrera de nouveau dans l'enceinte 5.

Le fonctionnement décrit ci-dessus suppose qu'un cycle complet se déroule à chaque passage de l'animal dans l'enceinte 5. Il peut cependant être prévu, sur le tableau de commande 28, un sélecteur qui permet de choisir une fréquence de fonctionnement plus faible, le cycle de nettoyage se déclenchant seulement une fois tous les "N" passages de l'animal. La durée d'ouverture de l'électrovanne 17 et la quantité de "litière" distribuée par le dispositif 38 peuvent être fonctions de cette sélection de fréquence.

Comme il va de soi, et comme il ressort de ce qui précède, l'invention ne se limite pas à la seule forme d'exécution de cet appareil sanitaire pour chiens et chats qui a été décrite ci-dessus, à titre d'exemple ; elle en embrasse, au contraire, toutes les variantes de réalisation et d'application respectant le même principe. En particulier, l'on ne s'éloignerait pas du cadre de l'invention :

- en modifiant le détail des moyens de rinçage des parois latérales et du fond du bac, qui sont réalisables sous toute autre forme permettant la distribution d'eau sur les parties à nettoyer ;

- en modifiant les dimensions extérieures et intérieures de l'appareil, pour qu'il puisse recevoir des animaux de plus grande taille ;

- en réalisant un appareil similaire destiné à une utilisation non pas domestique mais collective, par exemple dans un ensemble immobilier ou installé dans des lieux publics.

10

<u>REVENDICATIONS</u>

1. Appareil sanitaire pour chiens et chats, du genre comprenant une enceinte (5) pourvue d'une ouverture d'accès (6) susceptible d'être fermée par une porte (7), avec une arrivée d'eau (16) raccordée à des moyens de rinçage (11) des parois latérales (4) de l'enceinte (5) et à des moyens de lavage (12,13) de la partie inférieure (3) de l'enceinte (5), au moins une électrovanne (17) étant prévue entre l'arrivée d'eau (16) et les moyens de rinçage et de lavage (11,12,13), tandis qu'un broyeur (22) est intercalé sur une évacuation d'eau (20,21,24) partant de la partie inférieure (3) de l'enceinte (5), <u>caractérisé en ce que</u> sont prévus :

- des moyens à moteur (8) pour la commande d'ouverture et de fermeture de la porte (7).

- un coffret électronique (27) déclenchant et contrôlant le déroulement automatique d'une séquence de nettoyage, avec alimentation en eau des moyens de rinçage et de lavage (11,12,13) par ouverture de l'électrovanne (17),

- des moyens (25,26) de détection de la présence d'un animal dans l'enceinte (5), qui interdisent toute séquence de nettoyage aussi longtemps que l'animal est présent, et qui autorisent l'actionnement des moyens à moteur précités (8), pour la fermeture de la porte (7), après la sortie de l'animal, et

- un contact électrique (10) de détection de la fermeture de la porte (7), autorisant le déroulement de la séquence de nettoyage proprement dite.

2. Appareil sanitaire pour chiens et chats selon la revendication 1, caractérisé en ce que les moyens de rinçage des parois latérales (4) de l'enceinte (5) sont constitués par un dispositif rotatif à jets (11), alimenté en eau sous pression lorsque l'électrovanne (17) est ouverte.

3. Appareil sanitaire pour chiens et chats selon la revendication 1 ou 2, caractérisé en ce que les moyens de lavage de la partie inférieure (3) de l'enceinte (5) sont constitués par une sortie d'eau unique (12) animée d'un mouvement de rotation alternatif, à partir d'un moteur (15) mis en service durant l'ouverture de l'électrovanne (17).

4. Appareil sanitaire pour chiens et chats selon l'une quelconque des revendications 1 à 3, caractérisé en ce que les moyens de détection de la présence d'un animal dans l'enceinte (5) comprennent un émetteur infrarouge (25) et un récepteur infrarouge (26), reliés électriquement au coffret électronique (27).

5. Appareil sanitaire pour chiens et chats selon l'une quelconque des revendications 1 à 4, caractérisé en ce que l'évacuation d'eau (20,21,24) comporte un pressostat (23) qui contrôle le fonctionnement du broyeur (22), par l'intermédiaire du coffret électronique (27).

6. Appareil sanitaire pour chiens et chats selon l'une quelconque des revendications 1 à 5, caractérisé en ce que le coffret électronique (27) est prévu pour commander la fermeture de la porte (7), par actionnement des moyens à moteur précités (8), seulement après un certain délai de sécurité suivant la détection de sortie de l'animal hors de l'enceinte (5) par les moyens de détection de présence (25,26).

7. Appareil sanitaire pour chiens et chats selon la revendication 6, caractérisé en ce que le coffret électronique (27) est prévu pour faire débuter la séquence de nettoyage proprement dite, avec ouverture de l'électrovanne (17), seulement après un deuxième délai de sécurité suivant la détection de fermeture de la porte (7) par le contact électrique correspondant (10).

8. Appareil sanitaire pour chiens et chats selon l'une quelconque des revendications 1 à 7, caractérisé en ce qu'il comporte encore un dispositif (38) de distribution de "litière", actionné sous le contrôle du coffret électronique (27) après une séquence de nettoyage proprement dite, pour distribuer automatiquement un produit tel que granulés sur la partie inférieure (3) de l'enceinte (5).

9. Appareil sanitaire pour chiens et chats selon l'une quelconque des revendications 1 à 8, caractérisé en ce qu'est prévu un dispositif (45,46) de diffusion automatique d'un produit désodorisant, actionné sous le contrôle du coffret électronique (27) après une séquence de nettoyage proprement dite.

10. Appareil sanitaire pour chiens et chats selon l'une quelconque des revendications 1 à 9, caractérisé en ce que le coffret électronique (27) est relié à un tableau de commande (28) prévu pour une sélection de la fréquence de déclenchement du cycle de nettoyage, permettant de déclencher ce cycle seulement une fois pour "N" passages successifs de l'animal.

FIG.1

0209474

1/4

FIG. 2

FIG. 3

3/4

0209474

FIG.4

Office européen
des brevets

**RAPPORT DE RECHERCHE EUROPEENNE**

0209474

Numero de la demande

EP 86 42 0177

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 247 585 (JANAUDY) | | A 01 K 1/01<br>A 01 K 1/035 |
| | --- | | |
| A,D | US-A-2 204 416 (KRAMER) | | |
| | --- | | |
| A,D | US-A-3 318 285 (BETHAM) | | |
| | ----- | | |

**DOMAINES TECHNIQUES RECHERCHES (Int. Cl.4)**

A 01 K

Le présent rapport de recherche a été établi pour toutes les revendications

| Lieu de la recherche | Date d'achèvement de la recherche | Examinateur |
|---|---|---|
| LA HAYE | 15-10-1986 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82